# EUROPEAN PATENT SPECIFICATION

(11) **EP 3 127 298 B1**
(45) Date of publication and mention of the grant of the patent: **04.11.2020**
(21) Application number: 15717705.6
(22) Date of filing: 25.03.2015
(51) Int. Cl.: H04L 29/06, H04W 8/26, H04W 12/02, H04L 29/12, H04W 4/02

(54) **SPECIFYING A MAC ADDRESS BASED ON LOCATION**
SPEZIFIZIERUNG EINER MAC-ADRESSE AUF DER BASIS EINES STANDORTES
SPÉCIFICATION D'UNE ADRESSE MAC SUR LA BASE D'UN EMPLACEMENT

(30) Priority: 31.03.2014 US 201414230291
(43) Date of publication of application: 08.02.2017
(73) Proprietor: Google LLC, Mountain View, CA 94043 (US)
(72) Inventor: SEDDON, David Antony, Mountain View, California 94043 (US)
(74) Representative: Colonna, Matthew Oliver
(86) International application number: PCT/US2015/022406
(87) International publication number: WO 2015/153214

(56) References cited:
- JP-A- 2005 064 572
- US-A1- 2011 066 756
- US-A1- 2011 171 909
- US-A1- 2012 258 688
- GRUTESER M ET AL: "ENHANCING LOCATION PRIVACY IN WIRELESS LAN THROUGH DISPOSABLE INTERFACE IDENTIFIERS: A QUANTITATIVE ANALYSIS", WMASH 2003. PROCEEDINGS OF THE 1ST. ACM INTERNATIONAL WORKSHOP ON WIRELESS MOBILE APPLICATIONS AND SERVICES ON WLAN HOTSPOTS. SAN DIEGO, CA, SEPT. 19, 2003, 19 September 2003 (2003-09-19), pages 46-55, XP001046685, DOI: 10.1145/941326.941334 ISBN: 978-1-58113-768-2
- ORAVA P ET AL: "Temporary MAC Address for Anonymity", IEEE P802.11, IEEE, PISCATAWAY, NJ, USA, 14 March 2001 (2001-03-14), XP040383749,

## Description

### BACKGROUND

In a Wireless Local Area Network (WLAN) (e.g. Wi-Fi) or Bluetooth networked computing environment, mobile devices are identified by MAC addresses broadcast from the devices. MAC addresses include "media access control" (MAC) addresses with various numbering protocols, such as the IEEE 802, 48-bit address containing six groups of two hexadecimal digits. Permanent MAC addresses associated with Wi-Fi and Bluetooth components are often written into Read Only Memory (ROM). The use of MAC addresses to identify mobile devices is susceptible to other people tracking the travel of the device from one location to the next. Protocols that use permanent MAC addresses, associated with network interface hardware, are most susceptible to tracking. Devices may be tracked by installing Wi-Fi and/or Bluetooth radio receivers, typically in multiple locations, and recording the MAC addresses of any devices that come within range, which may be undesirable for some users.
US-A1-2012/0258688 relates to a cellular phone terminal, a cellular phone system and a privacy protection method therefor that enable to prevent leakage of private information from the communication data when conducting a search for wireless LAN base stations.
An SSID•MAC address management section is allocated, by a MAC address management server, one or more temporary MAC addresses together with their time limit by way of a cellular phone network transmitter/receiver section and a cellular phone base station, and the temporary MAC addresses are used when conducting a search for wireless LAN base stations.

US-A1-2011/0066756 relates to a communication device which selects a layer 2 address to be changed, and transmits a present check request message via a network to which the communication device is connected. The communication device determines, based on a received result of the present check request message, whether the layer to address is duplicated with another communication device connected to the network. When the communication device confirms that the layer to address is not duplicated, the communication device changes the layer to address of the communication device.

JP-A-2005/064572 relates to a communication address configuration method and information processing apparatus which is provided with an interface ID table for storing a plurality of pairs of prefixes and interface IDs, and uses an interface ID corresponding to a value of the prefix notified from an access destination of the internet via router for the IPv6 address of the information processing apparatus.

Gruteser M et al: "Enhancing Location Privacy in Wireless LAN through Disposable Interface Identifiers: A Quantitative Analysis", WMASH 2003, pp. 46-55 relates to the disposal of a client's interface identifier in wireless local area networks.

### BRIEF SUMMARY

The present invention defines a method according to claim 1. Advantageous embodiments are defined by claims 2 to 11.

According to an implementation of the disclosed subject matter, a location-based method of mobile device identity obfuscation is disclosed. The steps include performing at least one operation, on a device, using a first plurality of settable parameters in a first locality. Additional steps of receiving, from a user, a second plurality of settable parameters, and storing the second plurality of settable parameters on the device is disclosed. The steps of determining a second locality to link with the second plurality of settable parameters, then storing the second locality and linking with the second plurality of settable parameters. The method further includes receiving a request to change the parameters in response to a change from the first locality to the second locality, and performing an operation to replace the first plurality of settable parameters with the second plurality of settable parameters. Another step includes performing at least one operation, on the device, using the second plurality of settable parameters, wherein the use of the second plurality of settable parameters acts to obfuscate the identity of the device from all other devices on a network.

In an implementation of the disclosed subject matter, a mobile computing device may determine that the mobile computing device is in a first locality, and assign a first MAC address to the mobile computing device based upon the first locality. The device may communicate with a first remote computing device over a first wireless network using the first MAC address as an identifying address of the mobile device. Subsequently or concurrently, the mobile computing device may enter a second locality, and assign a second MAC address to the mobile computing device based upon the second locality. The mobile device may then communicate with a second remote computing device, which may be the same device as the first remote device, over a second wireless network, which may be the same as the first network, using the second MAC address as an identifying address of the mobile device.

The settable parameters include a location name, a locality, a time period, a Wi-Fi on/off switch value, a Wi-Fi power level, a Wi-Fi network name, a GPS on/off switch value, an Anonymity parameter, a regeneration frequency parameter, and a bluetooth on/off switch value.

The location name may be an organization name, a business name, a street address, a street intersection, a postal address, and an arbitrary descriptor, and may be any number of alphanumeric characters that conforms to a computing device data length requirement. The locality is mapped to a set of location coordinates, where the location coordinates may be latitude and longitude coordinates, and map coordinates. A retrieval of the location coordinates may include use of a Global Position System (GPS), trilateration, triangulation, multilateration of radio signals, and manual entry. The locality may also be identifiable by a group of at least three sets of longitude and latitude coordinates that may describe a user-defined geographic region of a geometric shape. It may also be identifiable by a single set of longitude and latitude coordinates and a radial distance that defines a geographic region, or the locality may be identifiable by a previously specified default locality.

The Wi-Fi power level includes high, medium, and low levels, and may include a power level positioned at a value between a maximum and minimum output power level for the computing device. The Anonymity parameter defines a rule for preparing an alternate MAC address, the rule includes none, a randomly defined alternate MAC address, and a statically defined alternate MAC address. Also, the regeneration frequency parameter includes none, a random frequency, a predetermined schedule, a predetermined interval, and an event trigger. The event trigger includes exiting a sleep mode, enabling Wi-Fi, and losing Wi-Fi connectivity.

The method also includes performing an operation to replace an existing MAC address with an alternate MAC address, wherein the alternate MAC address is determined by a rule specified by the Anonymity parameter. The MAC address specified includes a Link Layer address including a Media Access Control Address, a Burned in Address, a physical address, an Ethernet Hardware Address, and an Extended Unique Identifier.

The method includes an operation to change the Wi-Fi on/off switch value and may be done by a manual process or an automatic process. The communication between the device and the network may be by wired or wireless electromagnetic signal propagation.

Possible devices used in the disclosed method include a cell phone, a smartphone, a tablet computer, a personal digital assistant, a digital music player, a wearable computer, a laptop computer, an ultra-mobile PC, a vehicle entertainment system, and a global positioning system

Additionally, a method for gracefully handling a MAC address replacement is disclosed, whereby two MAC addresses are simultaneously maintained long enough to allow open sockets to smoothly migrate to a alternate IP address associated with the alternate MAC address. The method includes binding the existing MAC address of a device to a network interface, and determining an existing IP address linked with the existing MAC address to form a MAC and IP address pair. A subsequent step determining a socket connection (e.g. UDP/TCP) linked with the existing IP address for each application running. The following step involves waiting for a first event trigger (e.g. the user moving into a location covered by a location profile that specifies a MAC address change) to occur and then establishing a alternate MAC address upon occurrence of the event trigger. The binding of the alternate MAC address to the network interface is performed, and a alternate IP address is established and linked with the alternate MAC address. A subsequent step of determining a socket connection linked with the alternate IP address for each application that is not connected with the existing IP address is performed. The following step of waiting for a second event trigger (e.g. expiration of a migration timer) and subsequently closing each open socket connection linked with the existing IP address for each application is performed. This is followed by a step establishing a socket connection linked with the alternate IP address for each application linked with the formerly open existing IP address. The final step disengages the existing MAC address and IP address pair from the network interface of the device.

The first event trigger may be a selection of a geographic location label, selection of a MAC address from a list of available addresses, or manual entry of a MAC address that acts as an instruction to enable a process to replace the MAC address of the computing device. The second event trigger is an expiration of a migration timer.

The existing IP address and the alternate IP address may be Internet Protocol (IP) version 4 (IPv4) or Internet Protocol (IP) version 6 (IPv6) addresses. The socket connection may be User Datagram Protocol (UDP), and a Transmission Control Protocol (TCP), and the network interface may be implemented in hardware, firmware or software.

Additional features, advantages, and implementations of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows a computer according to an implementation of the disclosed subject matter.
FIG. 2 shows a network configuration according to an implementation of the disclosed subject matter.
FIG 3a shows a geographic location profile that lists network connectivity settings that are configurable by the user to support location dependent privacy.
FIG 3b shows a geographic location profile according to an implementation of the disclosed subject matter.
FIG 3c shows another geographic location profile according to an implementation of the disclosed subject matter.
FIG. 4 shows a flow diagram of the operation of the disclosed subject matter according to an implementation of the disclosed subject matter.
FIG. 5 describes an implementation of the method of gracefully handling a MAC address replacement, by maintaining two MAC and IP addresses simultaneously according to an implementation of the disclosed subject matter.

### DETAILED DESCRIPTION

Due to the ease with which individual devices may be identified based on permanent or semi-permanent identifiers such as MAC addresses, it may be desirable to obfuscate the identity of the permanent MAC address from all other devices on the network based on user-selectable and user-defined location settings. The disclosed subject matter provides these and other capabilities.

In an implementation of the disclosed subject matter, a location-based method of mobile device identity obfuscation is disclosed. User-defined geographic location profiles are created that permit replacement of a MAC address when entering the geographic location. This may serve to disrupt or prevent undesired tracking of the MAC address within the locality, consequently facilitating enforcement of user privacy.

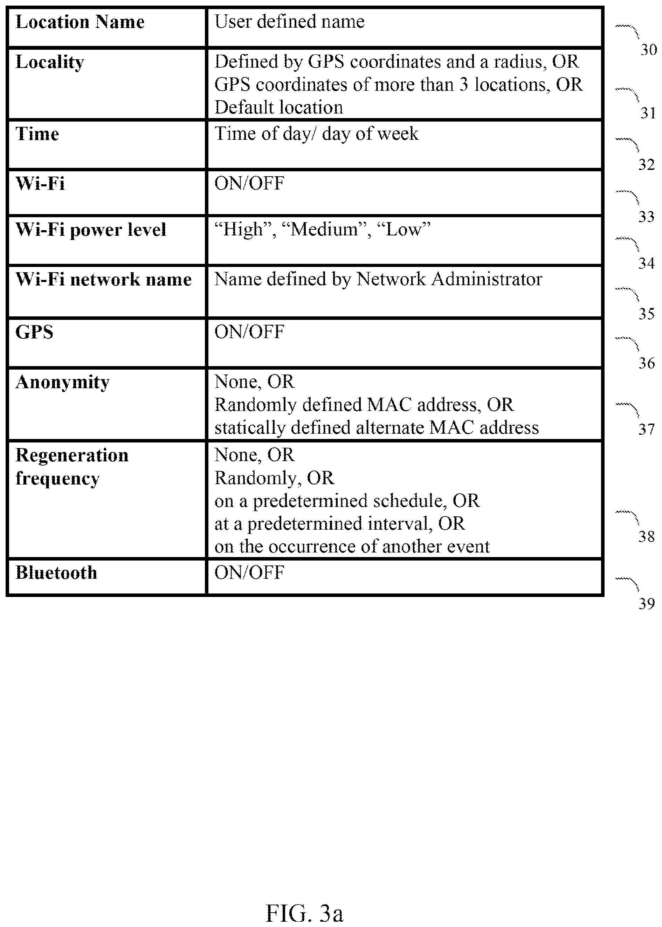

In an implementation of the disclosed subject matter, a method for obfuscating a device on a computer network may be based on enabling the user to define operations that a device may perform to obfuscate its device identifier (e.g. a MAC address) prior to or upon entering into specified geographic locations. FIG 3a shows a geographic location profile that lists network connectivity settings that are configurable by the user to support location dependent privacy. A location name 30 is specified, followed by a definition of the locality (e.g. geographic location) 31, a time of the day or week 32 when the profile is enforceable, and for each location, a toggle to enable or disable Wi-Fi 33, and if Wi-Fi is enabled, an output power level may be specified 34. Also, for each location, a Wi-Fi network name to which the computing device may connect may be specified 35. A field specifying whether to enable or disable the Global Positioning System (GPS) 36 while in the locality may also be provided. This capability potentially saves battery power when a user is in a known location for a period of time and location discovery based on GPS is unnecessary. Also, for each location, a MAC address changing protocol may be selected 37 to help provide user anonymity. If anonymity is not desired, a "none" setting can, for example, provide the default MAC address. The default MAC address may, for example, correspond to the permanent (e.g. burned-in) MAC address that may be set by a hardware manufacturer (e.g. a Network Interface Controller MAC address). If some degree of anonymity is desired, an alternate MAC address may be provided. The MAC address may be formed either by selecting a randomly defined alternate MAC address or a statically defined alternate MAC address. Moreover, the frequency of changing the alternate address (e.g. "Regeneration frequency") 38 may be automated to vary randomly, on a predetermined schedule, at a predetermined interval, or at the occurrence of another event (e.g. when Wi-Fi is disconnected). A field specifying whether to enable or disable Bluetooth networking 39 or similar local networking protocols may also be provided.

Localities may be defined by a single geographic location, plus a specified radial distance around that location, for example, a radius of 300 feet (100 meters). Alternatively, the locality may be defined by at least three (3) locations, where if the device remains within the boundary defined by the locations, then it is deemed to be at the locality. This option may be useful to define large properties, or campuses. Any implementation may allow the users to define the location by "where i am right now", as well as being able to highlight locations on a map or allow manually entered longitude and latitude coordinates. When not in one of the user defined locations, a default location may be provided. A locality also may be defined by a network access point or set of network access points, such as a Wi-Fi access point, or all Wi-Fi access points operated by a single entity. For example, Wi-Fi access points operated by a chain of coffee shops may be considered a "locality" even though the individual access points are geographically distributed, if they are identified as being operated by the same entity. Similarly, an access point at a single geographic location may be considered a "locality," such that if a user's device is connected to, or within range of connecting to the access point, the device is considered to be in the locality.

In an implementation, when the device loses connection with a defined wireless network (e.g. when the device's location exceeds the network range of the wireless signal), the device may wait a defined period of time (10s, 30s, 1m...), and then if the network is still not in range, turn off the Wi-Fi, Bluetooth, or other networking capability. The GPS may also be enabled at this time, which would allow the device to automatically re-enable the Wi-Fi or Bluetooth networking capability, when it reaches another predefined location.

While the 48bit/6byte MAC address field yields a large number of usable addresses, not all combinations of bits would yield a usable/legitimate MAC address. As a result, implementations disclosed herein may include random selection of a usable/legitimate MAC address from pools of addresses from various different vendors.

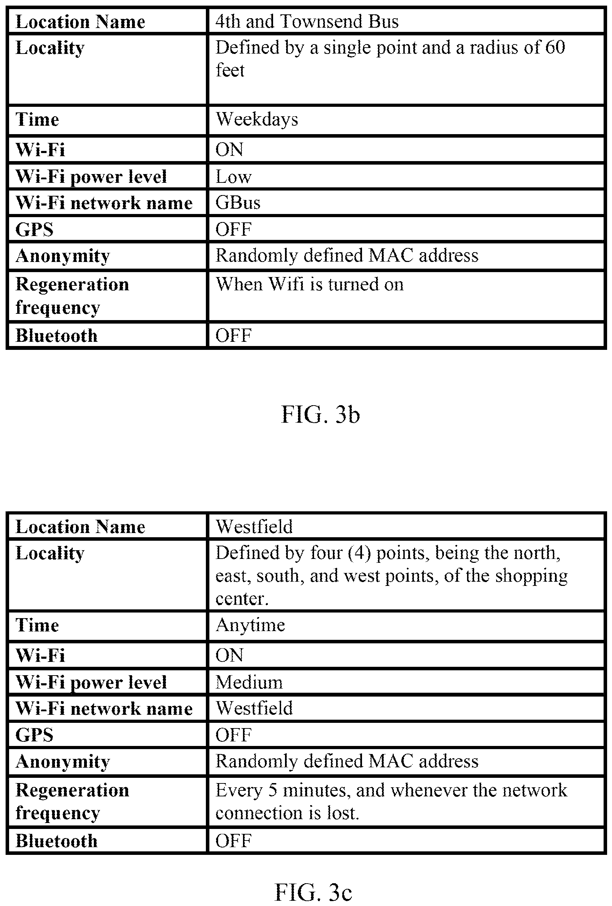

FIG 3b and FIG. 3c are example implementations of the settings of elements described in FIG 3a. In FIG 3b, the location name is defined as a vehicle (e.g. "4^{th} and Townsend Bus"). The locality is defined by the location of origin and within a radius of 60 ft from that location. The time is defined as "Weekdays", meaning Monday through Friday. In this location profile, the Wi-Fi is set "on", with a power level set to "low", and the user's computing device may connect to the "GBus" network, however, the GPS, and Bluetooth should be disabled and anonymity preserved by using a "randomly defined MAC address" that is regenerated when the Wi-Fi is turned on. In the implementation shown in FIG. 3c, the location name corresponds to a shopping center, and the locality is defined by four (4) points (e.g. four sets of coordinates) representing the north, east, south and west points of the shopping center, defining a geographic area. The settings should be active "anytime" the user enters the geographic area. Within the area, the Wi-Fi should be "on", with medium power level, and connectable with the "Westfield" network. The GPS, and Bluetooth should be disabled. Anonymity is preserved by a "randomly defined MAC address", regenerating "every 5 minutes and whenever the network connection is lost".

In some implementations, the complexity of configuration options described might be too cumbersome to implement on a small device display. The described implementation may be implemented on a webpage or other user interface that allows the users to configure the advanced features using a web browser. Alternative implementations may implement the disclosed subject matter using reduced features sets and customized apps on mobile phones, smart-phones, and tablets.

In an implementation, a user may specify a network identifier to use with a particular locality, or may specify a set of network identifiers to use with any of a set of localities. For example, a user may select a MAC address that is always used when the user's device is connected to a particular Wi-Fi access point. Thus, the functionality of some features that rely upon recognition of a network identifier such as a MAC address may be preserved, while still allowing the user to establish protection of the user's identity and/or other privacy-related data.

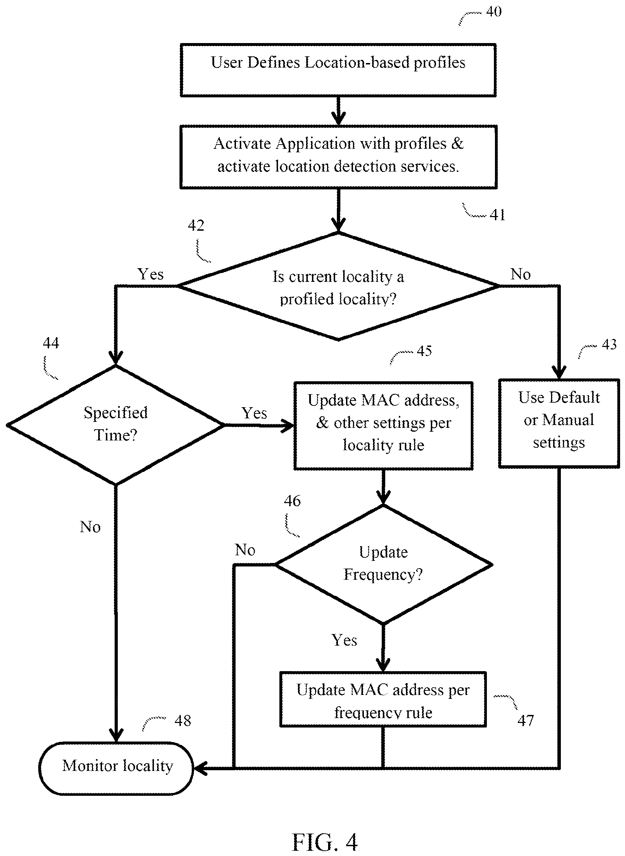

FIG. 4 shows a flow chart describing the operation of an implementation of the disclosed subject matter. A user defines the location-based profiles step 40 as shown in FIG. 3a, 3b, and 3c. In an implementation, a process automatically activates a previously stored location-based profile by detecting the geographical location of the device. The location monitoring application associated with the defined profile and location discovery processes (e.g. GPS-based location services, Wi-Fi access point identification, and the like) are activated on the computing device step 41. The application monitors the location reported by location services. If the current location of the computing device does not match one of the defined locations, the default or manual settings of the MAC address and other networking settings are used by the computing device step 43, and a location service on the computing device may be activated to monitor a change in location step 48. Alternatively, if a location match occurs at step 42, the specified time frame is compared against the real-time clock step 44. If the location profile matches the current time and date, the MAC address and other settings are updated according to the rule defined for that location (e.g., randomly defined MAC address and random regeneration frequency) step 45. If the Wi-Fi, Bluetooth, or other network setting is in a state opposite to that specified by the rule, it is changed to conform with the rule (e.g. if Wi-Fi is specified as enabled and is currently disabled, it is automatically enabled). If a regeneration frequency is specified for the location profile step 46, the MAC address is updated periodically as specified by the update frequency rule step 47. Thereafter, the location detection service is regularly monitored for a change in location step 48.

In some implementations of the method discussed above, the MAC address may periodically changed during use. One outcome of changing MAC addresses during use of a network is an interruption of network service and a resulting loss of data. To reduce the impact of this disruption of service, an old UDP/TCP socket ("connection") may be maintained with the established MAC address, while simultaneously another socket with another MAC address is opened. The originally-established MAC address remains in use so long as processes begun prior to implementing the new alternate MAC address remain in service and a predetermined time period has not lapsed (e.g. lapse of a migration timer). If the MAC addresses use the standard IP address allocation processes, in the case of IPv4 it would typically use DHCP and in IPv6 the standard neighbor discovery, the device would have dual MACs, and also dual IP addresses (IPs).

In order to reduce the overhead of maintaining two (2) sockets with two (2) disparate MAC addresses, it may be desirable to smoothly migrate network connections to the new IP address. To accomplish this, in one implementation, the device would continue to maintain any UDP/TCP sockets that are currently bound to the existing MAC+IP pair, however any new UDP/TCP connections would use the new, alternate IP. In this way, as the existing TCP connections are closed when the application has finished a transfer, eventually there would be zero (0) remaining TCP connections bound to the previously established IP address. Since UDP sockets are typically short lived, e.g. for DNS lookups, the migration would likely be quick. Some applications, however, may maintain long lived TCP connections that therefore would not be closed in a timely manner. To ensure the migration does happen, there may be, for example, a configurable upper limit for the system to wait for connections to close, after which the connections would immediately be closed (e.g. using a migration timer). Additionally, many applications may be configured with a retry capability, such that the interruption to a process is brief.

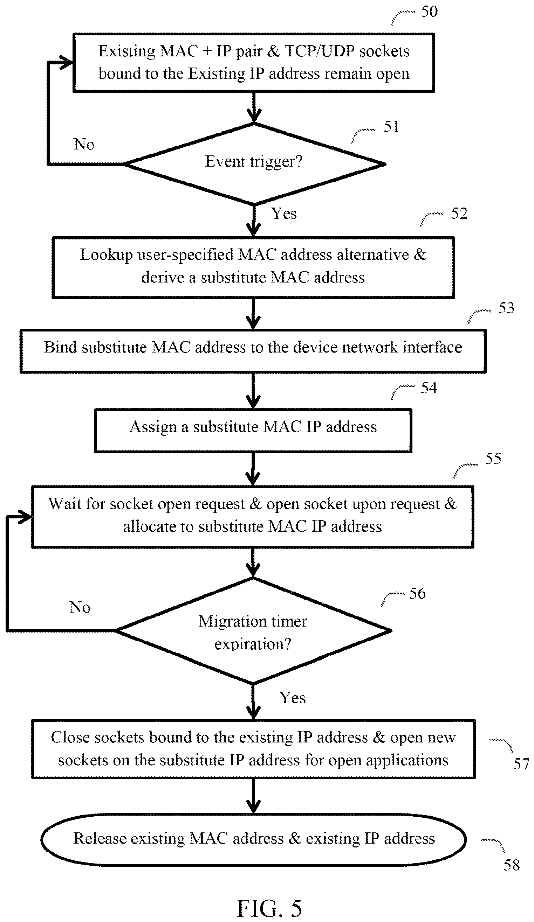

FIG. 5 describes an implementation of the method of gracefully handling a MAC address replacement, by maintaining two MAC and two IP addresses simultaneously long enough to allow open sockets to smoothly migrate to a new, alternate IP address associated with the alternate MAC address. An existing MAC + IP pair and any TCP/UDP sockets bound to the existing IP address remain open in step 50. An event trigger (e.g. time or location) induces a change in the MAC address in step 51. A new, alternate MAC address is allocated at step 52, such as by a process as previously described for the location profiles, and is bound to the device network interface as an alternate MAC address step 53. The network interface would have provisions to bind both the old, existing MAC address and the new, alternate MAC address simultaneously. The Network Layer Internet Protocol (IP) address is assigned by normal processes step 54, such that the alternate MAC address would also have a new, alternate IP address. At this point, the computing device would have an existing MAC + IP pair and existing TCP/UDP sockets, bound to the existing IP address. Simultaneously, an alternate MAC + IP pair is present, and for a short period of time, zero (0) TCP/UDP sockets are bound to the alternate IP address. Any new socket open requests to the operating system are allocated to the alternate IP address instead of the existing IP address, step 55. Existing sockets continue to operate until a migration timer expires, step 56, at which time the sockets bound to the existing IP address are closed. The applications are expected to gracefully handle the socket closing, and merely reopen new sockets that the operating system allocates to the alternate IP address, step 57. The old, existing MAC + IP pairs would subsequently be released, step 58.

Implementations of the presently disclosed subject matter may be implemented in, and used with, a variety of component and network architectures. Any device capable of performing arithmetic operations on data is considered a "computer" or "computing device" for purposes of this disclosure, and may include general or special-purpose computing devices. The terms "computer" and "computing device" are synonymous herein. Example computers include cellular phones, smartphones, tablet computers, personal digital assistants, digital music players, wearable computers, laptop computers, personal computers (PC's), desktop computers, networked servers (e.g. "cloud based" servers), vehicle entertainment systems, global positioning systems, and in-flight entertainment systems. Vehicle entertainment systems, GPS, and in-flight entertainment systems are examples of special-purpose computing devices.

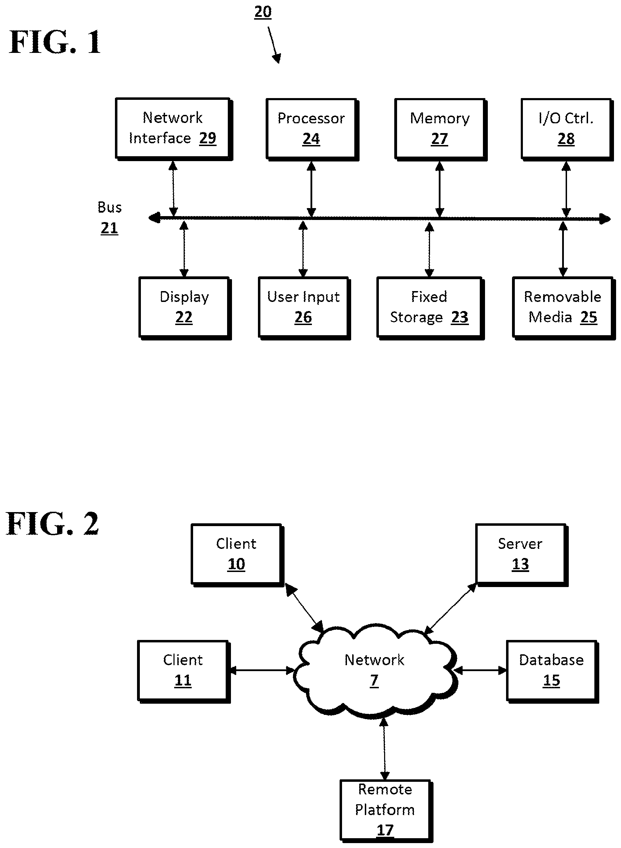

FIG. 1 is an example computer 20 suitable for implementing implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory may contain, among other code, the Basic Input-Output system (BIOS) which controls basic hardware operation such as the interaction with peripheral components. Applications resident with the computer 20 are generally stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 2.

Many other devices or components (not shown) may be connected in a similar manner (e.g., document scanners, digital cameras and so on). Conversely, all of the components shown in FIG. 1 need not be present to practice the present disclosure. The components may be interconnected in different ways from that shown. The operation of a computer such as that shown in FIG. 1 is readily known in the art and is not discussed in detail in this application. Code to implement the present disclosure may be stored in computer-readable storage media such as one or more of the memory 27, fixed storage 23, removable media 25, or on a remote storage location.

FIG. 2 shows an example network arrangement according to an implementation of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
by a mobile computing device (10, 11, 20), determining that the mobile computing device is in a first locality;
assigning a first media access control (MAC) address to the mobile computing device (10, 11, 20) based upon the first locality;
communicating with a first remote computing device over a first wireless network (7) using the first MAC address as an identifying address of the mobile computing device (10, 11, 20);
determining, by the mobile computing device (10, 11, 20), that the mobile computing device has entered a second locality;
assigning a second MAC address to the mobile computing device based upon the second locality;
storing the second MAC address in association with the second locality; and
communicating with a second remote computing device over a second wireless network using the second MAC address as an identifying address of the mobile computing device (10, 11, 20) when the mobile computing device is determined to have entered the second locality,
**characterised in that** the step of assigning the second MAC address to the mobile computing device (10, 11, 20) comprises:
binding the first MAC address to a network interface of the mobile computing device (10, 11, 20);
determining an existing first network address linked with the first MAC address;
determining a socket connection linked with the first network address for at least one application executing on the mobile computing device (10, 11, 20);
determining the second MAC address based upon a first event trigger;
binding the second MAC address to the network interface of the mobile computing device (10, 11, 20);
determining a second network address linked with the second MAC address;
determining a socket connection linked with the second network address for at least one application not connected with the existing first network address;
upon the expiration of a migration timer, closing each socket connection linked with the existing first network address for each at least one application connected with the existing first network address;
determining a socket connection linked with the second network address for each application connected with each closing socket connection linked with the first network address; and
releasing the first MAC address and the first network address from the network interface of the mobile computing device (10, 11, 20).

2. The method of claim 1, wherein the first locality is identified by an identification of a wireless access point of the first wireless network.

3. The method of claim 1, wherein the first MAC address is assigned to the first locality, and is used as the identifying address of the mobile computing device (10, 11, 20) in a subsequent communication over the first wireless network; preferably wherein the first MAC address is assigned to the first locality based upon a user input.

4. The method of claim 1, wherein the second MAC address is randomly generated.

5. The method of any preceding claim, further comprising:
performing at least one operation, on said mobile computing device (10, 11, 20), using a first plurality of settable parameters in the first locality;
receiving, from a user, a second plurality of settable parameters;
storing the second plurality of settable parameters on the mobile computing device (10, 11, 20);
determining the second locality to link with the second plurality of settable parameters;
storing the second locality and linking with the second plurality of settable parameters;
receiving a request to change the parameters in response to a change from the first locality to the second locality;
performing an operation to replace the first plurality of settable parameters with the second plurality of settable parameters when the device (10, 11, 20) is determined to have entered the second locality; and
performing at least one operation, on the device (10, 11, 20), using the second plurality of settable parameters.

6. The method of claim 5, wherein the settable parameters comprise a location name, a locality, a time period, a Wi-Fi on/off switch value, a Wi-Fi power level, a Wi-Fi network name, a GPS on/off switch value, an Anonymity parameter, a regeneration frequency parameter, and a bluetooth on/off switch value.

7. The method of claim 5, wherein the locality is mapped to a set of location coordinates; preferably wherein the location coordinates comprise latitude and longitude coordinates, and map coordinates; and preferably still wherein retrieval of the location coordinates comprises use of a Global Positioning System (GPS), trilateration, triangulation, multilateration of radio signals, and manual entry.

8. The method of claim 5, wherein the locality is identifiable by a group of at least three sets of longitude and latitude coordinates that may describe a user-defined geographic region of a geographic shape; or wherein the locality is identifiable by a single set of longitude and latitude coordinates and a radial distance that defines a geographic region; or wherein the locality is identifiable by a previously specified default locality.

9. The method of claim 6, wherein the Anonymity parameter defines a rule for preparing an alternate MAC address, the rule comprising none, a randomly defined alternate MAC address, and a statically defined alternate MAC address.

10. The method of claim 5, wherein the second MAC address is determined by a rule specified by an Anonymity parameter.

11. The method of any preceding claim, wherein the first event trigger comprises receipt of an instruction to enable an operation to replace the first MAC address of the device (10, 11, 20); preferably wherein the instruction comprises a selection of a location name, a selection of a MAC address from a list of available addresses, and a manual entry of a MAC address.

## Patentansprüche

1. Verfahren, umfassend:
durch ein mobiles Computergerät (10, 11, 20), Ermitteln, dass sich das mobile Computergerät in einer ersten Lokalität befindet;
Zuordnen einer ersten Media Access Control(MAC)-Adresse zu dem mobilen Computergerät (10, 11, 20), basierend auf der ersten Lokalität;
Kommunizieren mit einem ersten Remote-Computergerät über ein erstes drahtloses Netzwerk (7) unter Nutzung der ersten MAC-Adresse als eine Kennungsadresse des mobilen Computergeräts (10, 11, 20);
Ermitteln, durch das mobile Computergerät (10, 11, 20), dass das mobile Computergerät in eine zweite Lokalität eingetreten ist;
Zuordnen einer zweiten MAC-Adresse zu dem mobilen Computergerät, basierend auf der zweiten Lokalität;
Speichern der zweiten MAC-Adresse in Verbindung mit der zweiten Lokalität; und
Kommunizieren mit einem zweiten Remote-Computergerät über ein zweites drahtloses Netzwerk unter Nutzung der zweiten MAC-Adresse als eine Kennungsadresse des mobilen Computergeräts (10, 11, 20), wenn ermittelt wird, dass das mobile Computergerät in eine zweite Lokalität eingetreten ist,
**dadurch gekennzeichnet, dass**
der Schritt des Zuordnens der zweiten MAC-Adresse zu dem mobilen Computergerät (10, 11, 20) Folgendes umfasst:
Binden der ersten MAC-Adresse an eine Netzwerkschnittstelle des mobilen Computergeräts (10, 11, 20);
Ermitteln einer bestehenden ersten Netzwerkadresse, die mit der ersten MAC-Adresse verknüpft ist;
Ermitteln einer mit der ersten Netzwerkadresse verknüpften Socket-Verbindung für zumindest eine Anwendung, die auf dem mobilen Computergerät (10, 11, 20) ausgeführt wird;
Ermitteln der zweiten MAC-Adresse basierend auf einem ersten Ereignisauslöser;
Binden der zweiten MAC-Adresse an die Netzwerkschnittstelle des mobilen Computergeräts (10, 11, 20);
Ermitteln einer zweiten Netzwerkadresse, die mit der zweiten MAC-Adresse verknüpft ist;
Ermitteln einer mit der zweiten Netzwerkadresse verknüpften Socket-Verbindung für zumindest eine Anwendung, die nicht mit der bestehenden ersten Netzwerkadresse verbunden ist;
nach Ablauf einer Migrationszeituhr, Schließen jeder mit der bestehenden ersten Netzwerkadresse verknüpften Socket-Verbindung für zumindest eine Anwendung, die mit der bestehenden ersten Netzwerkadresse verbunden ist;
Ermitteln einer mit der zweiten Netzwerkadresse verknüpften Socket-Verbindung für jede Anwendung, die mit jeder einzelnen der schließenden Socket-Verbindungen, die mit der ersten Netzwerkadresse verknüpft sind, verbunden ist; und
Lösen der ersten MAC-Adresse und der ersten Netzwerkadresse von der Netzwerkschnittstelle des mobilen Computergeräts (10, 11, 20).

2. Verfahren nach Anspruch 1, wobei die erste Lokalität durch ein Erkennen eines drahtlosen Zugangspunkts des ersten drahtlosen Netzwerks identifiziert wird.

3. Verfahren nach Anspruch 1, wobei die erste MAC-Adresse der ersten Lokalität zugeordnet ist und in einer nachfolgenden Kommunikation über das erste drahtlose Netzwerk als die Kennungsadresse des mobilen Computergeräts (10, 11, 20) verwendet wird; vorzugsweise wobei die erste MAC-Adresse der ersten Lokalität basierend auf einer Benutzereingabe zugeordnet wird.

4. Verfahren nach Anspruch 1, wobei die zweite MAC-Adresse nach dem Zufallsprinzip erzeugt wird.

5. Verfahren nach einem der vorhergehenden Ansprüche, ferner umfassend:
Durchführen zumindest einer Operation auf dem mobilen Computergerät (10, 11, 20) unter Nutzung einer ersten Vielzahl von einstellbaren Parametern in der ersten Lokalität;
Empfangen, von einem Benutzer, einer zweiten Vielzahl von einstellbaren Parametern;
Speichern der zweiten Vielzahl von einstellbaren Parametern auf dem mobilen Computergerät (10, 11, 20);
Ermitteln der zweiten mit der zweiten Vielzahl von einstellbaren Parametern zu verknüpfenden Lokalität;
Speichern der zweiten Lokalität und Verknüpfen dieser mit der zweiten Vielzahl von einstellbaren Parametern;
Empfangen einer Anforderung zum Ändern der Parameter in Reaktion auf einen Wechsel von der ersten Lokalität zu der zweiten Lokalität;
Durchführen einer Operation zum Ersetzen der ersten Vielzahl von einstellbaren Parametern durch die zweite Vielzahl von einstellbaren Parametern, wenn ermittelt wird, dass das Gerät (10, 11, 20) in die zweite Lokalität eingetreten ist; und
Durchführen zumindest einer Operation auf dem Gerät (10, 11, 20) unter Nutzung der zweiten Vielzahl von einstellbaren Parametern.

6. Verfahren nach Anspruch 5, wobei die einstellbaren Parameter den Namen eines Standorts, eine Lokalität, einen Zeitraum, einen Wert für das Ein-/Ausschalten von WLAN, einen WLAN-Leistungspegel, den Namen eines WLAN-Netzwerks, einen Wert für das Ein-/Ausschalten von GPS, einen Anonymitätsparameter, einen Regenerationsfrequenzparameter und einen Wert für das Ein-/Ausschalten von Bluetooth umfassen.

7. Verfahren nach Anspruch 5, wobei die Lokalität auf einem Satz von Standortkoordinaten abgebildet wird; vorzugsweise wobei die Standortkoordinaten Breiten- und Längengrade und Kartenkoordinaten umfassen; und noch bevorzugter wobei ein Abrufen der Standortkoordinaten die Verwendung eines Global Positioning System (GPS), Trilateration, Triangulation, Multilateration von Funksignalen und manuelle Eingabe umfasst.

8. Verfahren nach Anspruch 5, wobei die Lokalität durch eine Gruppe von zumindest drei Sätzen von Längen- und Breitengraden, die eine benutzerdefinierte geografische Region einer geografischen Form beschreiben können, identifizierbar ist; oder wobei die Lokalität durch einen einzelnen Satz von Längen- und Breitengraden und einen radialen Abstand, der eine geografische Region definiert, identifizierbar ist; oder wobei die Lokalität durch eine zuvor vorgegebene Standradlokalität identifizierbar ist.

9. Verfahren nach Anspruch 6, wobei der Anonymitätsparameter eine Regel zum Herstellen einer alternativen MAC-Adresse definiert, wobei die Regel keine, eine nach dem Zufallsprinzip definierte alternative MAC-Adresse und eine statisch definierte alternative MAC-Adresse umfasst.

10. Verfahren nach Anspruch 5, wobei die zweite MAC-Adresse durch eine durch einen Anonymitätsparameter spezifizierte Regel ermittelt wird.

11. Verfahren nach einem der vorhergehenden Ansprüche, wobei der erste Ereignisauslöser den Empfang einer Anweisung umfasst, eine Operation zum Ersetzen der ersten MAC-Adresse des Geräts (10, 11, 20) zu aktivieren; vorzugsweise wobei die Anweisung eine Auswahl eines Namens eines Standorts, eine Auswahl einer MAC-Adresse aus einer Liste verfügbarer Adressen und eine manuelle Eingabe einer MAC-Adresse umfasst.

## Revendications

1. Procédé comprenant :
par un dispositif informatique mobile (10, 11, 20), en déterminant que le dispositif informatique mobile est dans un premier emplacement ;
l'attribution d'une première adresse de contrôle d'accès aux médias (MAC) au dispositif informatique mobile (10, 11, 20) sur la base du premier emplacement ;
la communication avec un premier dispositif informatique à distance sur un premier réseau sans fil (7) en utilisant la première adresse MAC comme adresse d'identification du dispositif informatique mobile (10, 11, 20) ;
la détermination, par le dispositif informatique mobile (10, 11, 20), que le dispositif informatique mobile est entré dans un deuxième emplacement ;
l'attribution d'une deuxième adresse MAC au dispositif informatique mobile en fonction du deuxième emplacement ;
le stockage de la deuxième adresse MAC en association avec le deuxième emplacement ; et
la communication avec un deuxième dispositif informatique à distance sur un second réseau sans fil à l'aide de la deuxième adresse MAC comme adresse d'identification du dispositif informatique mobile (10, 11, 20) lorsque le dispositif informatique mobile est déterminé avoir saisi le deuxième emplacement,
**caractérisé en ce que**
l'étape consistant à attribuer la deuxième adresse MAC au dispositif informatique mobile (10, 11, 20) comprend :
la liaison de la première adresse MAC à une interface réseau du dispositif informatique mobile (10, 11, 20) ;
la détermination d'une première adresse réseau existante liée à la première adresse MAC ;
la détermination d'une connexion de socket liée à la première adresse réseau pour l'au moins une application exécutée sur le dispositif informatique mobile (10, 11, 20) ;
la détermination de la deuxième adresse MAC basée sur un premier déclencheur d'événement ;
la liaison de la deuxième adresse MAC sur la base d'un premier événement déclencheur ;
la détermination d'une deuxième adresse réseau liée à la deuxième adresse MAC ;
la détermination d'une connexion de socket liée à la deuxième adresse réseau pour au moins une application non connectée à l'adresse du premier réseau existant ;
à l'expiration d'un délai de migration, la fermeture de chaque connexion de socket liée à la première adresse réseau existante pour au moins une application connectée à la première adresse réseau existante ;
la détermination d'une connexion de socket liée à la deuxième adresse réseau pour chaque application connectée à chaque connexion de socket de fermeture liée à la première adresse du réseau ; et
la libération de la première adresse MAC et de la première adresse réseau à partir de l'interface réseau du dispositif informatique mobile (10, 11, 20).

2. Procédé selon la revendication 1, dans lequel le premier emplacement est identifié par une identification d'un point d'accès sans fil du premier réseau sans fil.

3. Procédé selon la revendication 1, dans lequel la première adresse MAC est attribuée au premier emplacement, et est utilisée comme adresse d'identification du dispositif informatique mobile (10, 11, 20) dans une communication ultérieure sur le premier réseau sans fil ; de préférence dans lequel la première adresse MAC est affectée au premier emplacement basé sur une entrée utilisateur.

4. Procédé selon la revendication 1, dans lequel la deuxième adresse MAC est générée aléatoirement.

5. Procédé selon l'une quelconque des revendications précédentes comprenant en outre :
l'exécution d'au moins une opération sur ledit dispositif informatique mobile (10, 11, 20), en utilisant une première pluralité de paramètres réglables dans le premier emplacement ;
la réception, à partir d'un utilisateur, d'une deuxième pluralité de paramètres de réglage ;
le stockage de la deuxième pluralité de paramètres de configuration sur le dispositif informatique mobile (10, 11, 20) ;
la détermination du deuxième emplacement à lier avec la deuxième pluralité de paramètres de réglage ;
le stockage du deuxième emplacement et la liaison avec la deuxième pluralité des paramètres de réglage ;
la réception d'une demande de modification des paramètres en réponse à un changement du premier emplacement au deuxième emplacement ;
la réalisation d'une opération pour remplacer la première pluralité des paramètres de réglage avec la deuxième pluralité de paramètres de réglage lorsque l'appareil (10, 11, 20) est déterminé avoir saisi le deuxième emplacement ; et
effectuer au moins une opération, sur le dispositif (10, 11, 20), en utilisant la deuxième pluralité des paramètres de réglage.

6. Procédé selon la revendication 5, dans lequel les paramètres définissables comprennent un nom de lieu, un emplacement, une période, une valeur d'activation/désactivation du Wi-Fi, un niveau de puissance du Wi-Fi, un nom de réseau Wi-Fi, une valeur d'activation/désactivation du GPS, un paramètre d'anonymat, un paramètre de fréquence de régénération et une valeur d'activation/désactivation du bluetooth.

7. Procédé selon la revendication 5, dans lequel l'emplacement est cartographié à un ensemble de coordonnées de localisation ; de préférence dans lequel les coordonnées de localisation comprennent des coordonnées de latitude et de longitude, et des coordonnées cartographiques ; et de préférence encore dans lequel l'extraction des coordonnées de localisation comprend l'utilisation d'un système de positionnement global (GPS), la trilatération, la triangulation, la multilatération de signaux radio, et la saisie manuelle.

8. Procédé selon la revendication 5, dans lequel l'emplacement est identifiable par un groupe d'au moins trois ensembles de coordonnées de longitude et de latitude qui peuvent décrire une région géographique d'une forme géographique définie par l'utilisateur ; ou dans lequel l'emplacement est identifiable par un seul ensemble de coordonnées de longitude et de latitude et une distance radiale qui définit une région géographique ; ou dans lequel l'emplacement est identifiable par un emplacement par défaut préalablement spécifié.

9. Procédé selon la revendication 6, dans lequel le paramètre d'anonymat définit une règle pour la préparation d'une adresse MAC alternative, la règle ne comprenant aucune, une adresse MAC alternative définie de manière aléatoire et une adresse MAC alternative définie de manière statique.

10. Procédé selon la revendication 5, dans lequel la deuxième adresse MAC est déterminée par une règle spécifiée par un paramètre d'anonymat.

11. Procédé selon l'une quelconque des revendications précédentes, dans lequel le premier événement déclencheur comprend la réception d'une instruction pour permettre une opération de remplacement de la première adresse MAC du dispositif (10, 11, 20) ; de préférence dans laquelle l'instruction comprend une sélection d'un nom d'emplacement, une sélection d'une adresse MAC à partir d'une liste d'adresses disponibles, et une entrée manuelle d'une adresse MAC.
